# EUROPEAN PATENT APPLICATION

(11) **EP 4 776 677 A1**
(43) Date of publication of application: **15.07.2026**
(21) Application number: 24861957.9
(22) Date of filing: 03.09.2024
(51) Int. Cl.: H04W 24/02

(54) **SPATIAL DOMAIN PARAMETER DETERMINATION METHOD, TERMINAL, AND NETWORK-SIDE DEVICE**

(30) Priority: 05.09.2023 CN 202311144124
(71) Applicant: Vivo Mobile Communication Co., Ltd., Dongguan, Guangdong 523863 (CN)
(72) Inventor: LU, Zhi, Dongguan, Guangdong 523863 (CN)
(74) Representative: Shieldmark
(86) International application number: PCT/CN2024/116545
(87) International publication number: WO 2025/051114

(57) **Abstract**

Embodiments of this application disclose a method for determining a spatial domain parameter, a terminal, and a network-side device, pertaining to the field of communication technologies. The method for determining a spatial domain parameter in the embodiments of this application includes: determining, by a terminal based on whether uplink transmission and downlink reception are present on a first time domain unit, a spatial domain parameter used for uplink transmission or downlink reception, where the first time domain unit is an SBFD time domain unit; and performing, by the terminal, uplink transmission or downlink reception using the spatial domain parameter.

## Description

### CROSS-REFERENCE TO RELATED APPLICATIONS

This application claims priority to Chinese Patent Application No. 202311144124.2, filed to the China National Intellectual Property Administration on September 5, 2023 and entitled "METHOD FOR DETERMINING SPATIAL DOMAIN PARAMETER, TERMINAL, AND NETWORK-SIDE DEVICE", which is incorporated herein by reference in its entirety.

### TECHNICAL FIELD

This application pertains to the field of communication technologies, and specifically, to a method for determining a spatial domain parameter, a terminal, and a network-side device.

### BACKGROUND

In the related art, the network side supports full duplex, while the terminal side supports half duplex. The network side is capable of simultaneously transmitting downlink data and receiving uplink data within one time domain unit (for example, a slot or a symbol); whereas a terminal can merely perform either uplink transmission or downlink reception in one time domain unit.

If the terminal side supports full duplex, it can achieve coverage gain and latency reduction while maintaining high uplink and downlink performance (throughput). Currently, both uplink transmission and downlink reception of the terminal adopt fixed spatial domain parameters, and the terminal is unable to flexibly utilize spatial domain parameters, which may impair communication performance.

### SUMMARY

Embodiments of this application provide a method for determining a spatial domain parameter, a terminal, and a network-side device, which can address the problem that the communication performance is impaired due to the terminal's inability to flexibly utilize a spatial domain parameter.

According to a first aspect, a method for determining a spatial domain parameter is provided and includes: determining, by a terminal based on whether uplink transmission and downlink reception are present on a first time domain unit, a spatial domain parameter used for uplink transmission or downlink reception, where the first time domain unit is an SBFD time domain unit; and performing, by the terminal, uplink transmission or downlink reception using the spatial domain parameter.

According to a second aspect, a method for determining a spatial domain parameter is provided and includes: sending, by a network-side device, indication information, where the indication information is used to indicate to a terminal whether uplink transmission and downlink reception are present on a first time domain unit, the indication information is further used for the terminal to determine a spatial domain parameter used for uplink transmission or downlink reception, and the first time domain unit is an SBFD time domain unit.

According to a third aspect, an apparatus for determining a spatial domain parameter is provided and includes: a determining module, configured to determine, based on whether uplink transmission and downlink reception are present on a first time domain unit, a spatial domain parameter used for uplink transmission or downlink reception, where the first time domain unit is an SBFD time domain unit; and a communication module, configured to perform uplink transmission or downlink reception using the spatial domain parameter.

According to a fourth aspect, an apparatus for determining a spatial domain parameter is provided and includes: a sending module, configured to send indication information, where the indication information is used to indicate to a terminal whether uplink transmission and downlink reception are present on a first time domain unit, the indication information is further used for the terminal to determine a spatial domain parameter used for uplink transmission or downlink reception, and the first time domain unit is an SBFD time domain unit.

According to a fifth aspect, a terminal is provided, where the terminal includes a processor and a memory, the memory stores a program or instructions capable of running on the processor, and when the program or instructions are executed by the processor, the steps of the method according to the first aspect are implemented.

According to a sixth aspect, a terminal is provided and includes a processor and a communication interface, where the processor is configured to determine, based on whether uplink transmission and downlink reception are present on a first time domain unit, a spatial domain parameter used for uplink transmission or downlink reception, where the first time domain unit is an SBFD time domain unit, and the communication interface is configured to perform uplink transmission or downlink reception using the spatial domain parameter.

According to a seventh aspect, a network-side device is provided, where the network-side device includes a processor and a memory, the memory stores a program or instructions capable of running on the processor, and when the program or the instructions are executed by the processor, the step of the method according to the second aspect is implemented.

According to an eighth aspect, a network-side device is provided and includes a processor and a communication interface, where the communication interface is configured to send indication information, the indication information is used to indicate to a terminal whether uplink transmission and downlink reception are present on a first time domain unit, the indication information is further used for the terminal to determine a spatial domain parameter used for uplink transmission or downlink reception, and the first time domain unit is an SBFD time domain unit.

According to a ninth aspect, a readable storage medium is provided, where the readable storage medium stores a program or instructions, and the program or the instructions, when executed by a processor, implement the steps of the method according to the first aspect, or implement the steps of the method according to the second aspect.

According to a tenth aspect, a wireless communication system is provided and includes a terminal and a network-side device, where the terminal may be configured to perform the steps of the method according to the first aspect, and the network-side device may be configured to perform the steps of the method according to the second aspect.

According to an eleventh aspect, a chip is provided, where the chip includes a processor and a communication interface, the communication interface is coupled to the processor, and the processor is configured to run a program or instructions to implement the steps of the method according to the first aspect, or to implement the steps of the method according to the second aspect.

According to a twelfth aspect, a computer program/program product is provided, where the computer program/program product is stored in a storage medium, and the computer program/program product is executed by at least one processor to implement the steps of the method according to the first aspect, or to implement the step of the method according to the second aspect.

In embodiments of this application, a terminal determines, based on whether uplink transmission and downlink reception are present on a first time domain unit, a spatial domain parameter used for uplink transmission or downlink reception, where the first time domain unit is an SBFD time domain unit. As the terminal can flexibly select the spatial domain parameter to be used, this helps improve the communication performance of the terminal.

### BRIEF DESCRIPTION OF DRAWINGS

FIG. 1 is a schematic diagram of a wireless communication system according to an embodiment of this application;
FIG. 2 is a schematic flowchart of a method for determining a spatial domain parameter according to an embodiment of this application;
FIG. 3 is a schematic diagram of a specific application of a method for determining a spatial domain parameter according to an embodiment of this application;
FIG. 4 is a schematic flowchart of a method for determining a spatial domain parameter according to an embodiment of this application;
FIG. 5 is a schematic diagram of a specific application of a method for determining a spatial domain parameter according to an embodiment of this application;
FIG. 6 is a schematic diagram of a specific application of a method for determining a spatial domain parameter according to an embodiment of this application;
FIG. 7 is a schematic diagram of a specific application of a method for determining a spatial domain parameter according to an embodiment of this application;
FIG. 8 is a schematic structural diagram of an apparatus for determining a spatial domain parameter according to an embodiment of this application;
FIG. 9 is a schematic structural diagram of an apparatus for determining a spatial domain parameter according to an embodiment of this application;
FIG. 10 is a schematic structural diagram of a communication device according to an embodiment of this application;
FIG. 11 is a schematic structural diagram of a terminal according to an embodiment of this application; and
FIG. 12 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, the term "or" in this application indicates at least one of the connected objects, for example, "A or B" encompasses three scenarios: scenario one, including A but not B; scenario two, including B but not A; and scenario three, including both A and B. The character "/" generally represents an "or" relationship between the associated objects.

The term "indication" in this application may be either a direct indication (or explicit indication) or an indirect indication (or implicit indication). The direct indication can be understood as the sender explicitly informing the receiver of specific information, operations to be performed, or request results in the sent indication; and the indirect indication can be understood as the receiver determining the corresponding information according to the indication sent by the sender, or making a judgment and determining the operations to be performed or request results according to the judgment result.

It should be noted that technologies described in the embodiments of this application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6^{th} generation (6^{th} Generation, 6G) communication system.

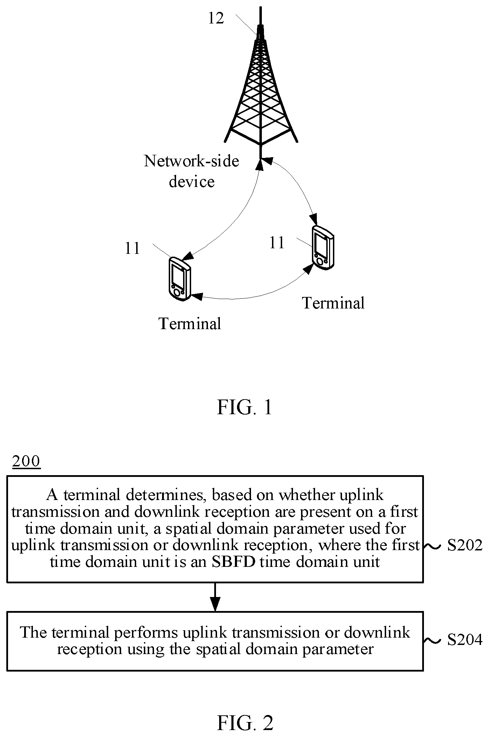

FIG. 1 is a block diagram of a wireless communication system to which the embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, or a vehicle unit. It should be noted that the embodiments of this application do not impose any limitation on a specific type of the terminal 11. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or other appropriate terms in the field, provided that the same technical effect is achieved. The base station is not limited to specific technical terms. It should be noted that in the embodiments of this application, the base station in the NR system is used as an example for description, and the specific type of the base station is not limited.

The following describes in detail a method for determining a spatial domain parameter provided in the embodiments of this application using some embodiments and application scenarios thereof with reference to the accompanying drawings.

As shown in FIG. 2, an embodiment of this application provides a method 200 for determining a spatial domain parameter. The method can be executed by a terminal, in other words, the method can be executed by software or hardware installed on the terminal. The method includes the following steps.

S202: The terminal determines, based on whether uplink transmission and downlink reception are present on a first time domain unit, a spatial domain parameter used for uplink transmission or downlink reception, where the first time domain unit is a subband full duplex (SubBand Full Duplex, SBFD) time domain unit.

The SBFD time domain unit is a time domain unit in which both an uplink subband and a downlink subband or a flexible subband are present, or a time domain unit in which both a downlink subband and an uplink subband or a flexible subband are present, where the flexible subband is a subband that can be scheduled for either uplink transmission or downlink reception.

In this embodiment, the first time domain unit may be a slot (slot) or a symbol. For the first time domain unit, the terminal may be indicated (or configured) as one of the following: performing uplink transmission and downlink reception simultaneously; performing only uplink transmission; and performing only downlink reception.

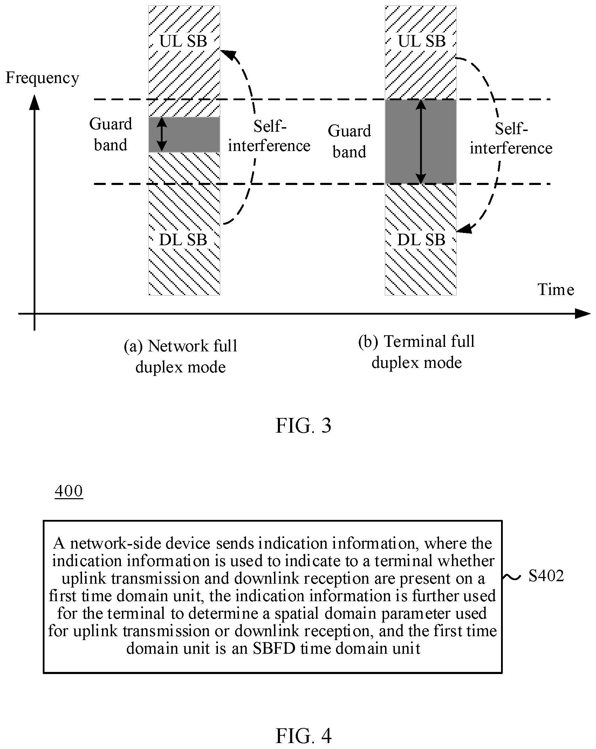

As shown in FIG. 3, FIG. 3(a) illustrates a subband (SubBand, SB) and guard band (Guard Band, GB) configuration for network-side subband full duplex, namely, the network configures time-frequency resources for an uplink subband (UL SB) and a downlink subband (DL SB) (or guard band). In the UL subband, the network receives UL channels or signals from served terminals, and in the DL subband, the network transmits DL channels or signals to served terminals. FIG. 3(b) illustrates a subband configuration for UE-side subband full duplex, where the network configures time-frequency resources for an uplink subband (UL SB) and a downlink subband (DL SB) (or guard band) for the terminal, and the UL transmission of the terminal may cause self-interference to DL reception. Different terminals may have different capabilities, and thus the guard bands may vary.

Optionally, the presence of both uplink transmission and downlink reception (that is, simultaneous transmission and reception) on the first time domain unit includes: at least one symbol overlaps between the uplink transmission and the downlink reception on the first time domain unit.

As shown in FIG. 3, for a terminal supporting simultaneous transmission and reception, when the terminal performs simultaneous transmission and reception, uplink transmission causes self-interference (self interference) to downlink reception, which impairs the communication performance of the terminal. Currently, fixed spatial domain parameters are adopted for uplink transmission and downlink reception of the terminal, without considering self-interference suppression methods. To suppress self-interference, in S202, the terminal determines, based on whether uplink transmission and downlink reception are present on the first time domain unit, the spatial domain parameter used for uplink transmission or downlink reception, which may include at least one of the following steps:
(1) If only uplink transmission is present on the first time domain unit, the terminal determines to perform uplink transmission using a first spatial domain parameter.
(2) If uplink transmission and downlink reception are present on the first time domain unit, the terminal determines to perform uplink transmission using a second spatial domain parameter.
(3) If only downlink reception is present on the first time domain unit, the terminal determines to perform downlink reception using a third spatial domain parameter.
(4) If uplink transmission and downlink reception are present on the first time domain unit, the terminal determines to perform downlink reception using a fourth spatial domain parameter.

The first spatial domain parameter, the second spatial domain parameter, the third spatial domain parameter, or the fourth spatial domain parameter may be configured or indicated by a network-side device, that is, the terminal side is pre-configured or pre-indicated with a plurality of spatial domain parameters. The network side may also pre-obtain the plurality of spatial domain parameters based on uplink transmission of the terminal.

S204: The terminal performs uplink transmission or downlink reception using the spatial domain parameter.

The uplink transmission may include transmitting an uplink channel or signal; and the downlink reception may include receiving a downlink channel or signal.

The spatial domain parameters provided in the embodiments of this application may include at least one of the following: sounding reference signal (Sounding Reference Signal, SRS) spatial relation information (spatial relation info), PUCCH spatial relation information, transmission configuration indicator (Transmission Configuration Indicator, TCI) state (state), and the like.

The method for determining a spatial domain parameter provided in this embodiment of this application enables the terminal to determine, based on whether uplink transmission and downlink reception are present on a first time domain unit, the spatial domain parameter used for uplink transmission or downlink reception, where the first time domain unit is an SBFD time domain unit. As the terminal can flexibly select the spatial domain parameter to be used, this helps improve the communication performance of the terminal.

Regarding the above improvement of the communication performance of the terminal, for example, the terminal determines the spatial domain parameter to reduce self-interference, and the spatial domain parameter determined by the terminal can make the self-interference caused by uplink transmission of the terminal to downlink reception as low as possible, reducing the self-interference of the terminal. In a case that the terminal has sufficient self-interference suppression capability, the throughput and coverage performance of the terminal can also be improved, and the latency can be reduced.

The method for determining a spatial domain parameter provided in the embodiments of this application, through the configuration of full duplex operation in NR, helps improve system resource utilization efficiency, reduce latency, and enhance coverage.

In one example, the uplink transmission includes physical uplink shared channel (Physical Uplink Shared Channel, PUSCH) transmission.

That the terminal determines to perform uplink transmission using a first spatial domain parameter includes: the terminal performs the PUSCH transmission on the first time domain unit using the first spatial domain parameter; where the terminal is indicated to perform only uplink transmission on the first time domain unit.

That the terminal determines to perform uplink transmission using a second spatial domain parameter includes: the terminal performs the PUSCH transmission on the first time domain unit using the second spatial domain parameter; where the terminal is indicated to simultaneously perform uplink transmission and downlink reception on the first time domain unit, and using the second spatial domain parameter can reduce self-interference in receiving the downlink data.

The PUSCH transmission may include PUSCH initial transmission (initial transmission) or retransmission (retransmission).

The PUSCH transmission may be PUSCH repetition transmission indicated by a dynamic grant (dynamic Grant), and the terminal is indicated with x spatial domain parameters, where x is an integer greater than 1, the first spatial domain parameter is one of the x spatial domain parameters, the second spatial domain parameter is one of the x spatial domain parameters, and the first spatial domain parameter is different from the second spatial domain parameter. This example may refer to Embodiment 3 below.

The PUSCH transmission may be PUSCH repetition transmission based on a configured grant (Configured Grant, CG), and the terminal is configured with y spatial domain parameters, where y is an integer greater than 1, the first spatial domain parameter is one of the y spatial domain parameters, the second spatial domain parameter is one of the y spatial domain parameters, and the first spatial domain parameter is different from the second spatial domain parameter. This example may refer to Embodiment 4 below.

In this example, for PUSCH repetition transmission indicated by a dynamic grant, the network indicates x spatial domain parameters. For a time domain unit with only PUSCH transmission, the terminal applies the first spatial domain parameter of the x spatial domain parameters to perform transmission; for a time domain unit in which PUSCH is transmitted, if downlink reception is also present, the terminal applies the second spatial domain parameter of the x spatial domain parameters to perform transmission.

For PUSCH repetition transmission based on a configured grant, the network configures y spatial domain parameters. For a time domain unit with only PUSCH transmission, the terminal applies the first spatial domain parameter of the y spatial domain parameters to perform transmission; for a time domain unit in which PUSCH is transmitted, if downlink reception is also present, the terminal applies the second spatial domain parameter of the y spatial domain parameters to perform transmission.

In one example, the uplink transmission includes physical uplink control channel (Physical Uplink Control Channel, PUCCH) transmission.

That the terminal determines to perform uplink transmission using a first spatial domain parameter includes: the terminal performs the PUCCH transmission on the first time domain unit using the first spatial domain parameter; where the terminal is only indicated to perform uplink transmission on the first time domain unit.

That the terminal determines to perform uplink transmission using a second spatial domain parameter includes: the terminal performs the PUCCH transmission on the first time domain unit using the second spatial domain parameter; where the terminal is indicated to simultaneously perform uplink transmission and downlink reception on the first time domain unit, and using the second spatial domain parameter can reduce self-interference in receiving the downlink data.

The PUCCH transmission is PUCCH repetition transmission indicated by a dynamic grant or based on a configured grant, and the terminal is indicated or configured with z spatial domain parameters, where z is an integer greater than 1, the first spatial domain parameter is one of the z spatial domain parameters, the second spatial domain parameter is one of the z spatial domain parameters, and the first spatial domain parameter is different from the second spatial domain parameter.

In this example, for PUCCH repetition transmission indicated by a dynamic grant or based on a configured grant, the network indicates z spatial domain parameters. For a time domain unit with only PUCCH transmission, the terminal applies the first spatial domain parameter of the z spatial domain parameters to perform transmission; for a time domain unit in which PUCCH is transmitted, if downlink reception is also present, the terminal applies the second spatial domain parameter of the z spatial domain parameters to perform transmission. This example may refer to Embodiment 5 below.

Optionally, the PUCCH transmission is associated with a reference signal, and the spatial domain parameter used for the PUCCH transmission is the same as the spatial domain parameter used for transmitting or receiving the reference signal. For details, refer to the description of Embodiment 5 below.

In one example, the downlink reception includes physical downlink shared channel (Physical Downlink Shared Channel, PDSCH) reception.

That the terminal determines to perform downlink reception using a third spatial domain parameter includes: the terminal performs the PDSCH reception on the first time domain unit using the third spatial domain parameter; where the terminal is only indicated to perform downlink reception on the first time domain unit.

That the terminal determines to perform downlink reception using a fourth spatial domain parameter includes: the terminal performs the PDSCH reception on the first time domain unit using the fourth spatial domain parameter; where the terminal is indicated to simultaneously perform uplink transmission and downlink reception on the first time domain unit, and using the fourth spatial domain parameter can reduce self-interference in transmitting the uplink data.

The PDSCH reception may include PDSCH repetition (repetition) reception.

The PDSCH reception may be PDSCH repetition reception indicated by a dynamic grant or based on a configured grant, and the terminal is indicated or configured with m spatial domain parameters, where m is an integer greater than 1, the third spatial domain parameter is one of the m spatial domain parameters, the fourth spatial domain parameter is one of the m spatial domain parameters, and the third spatial domain parameter is different from the fourth spatial domain parameter.

In this example, for PDSCH repetition reception indicated by a dynamic grant and based on a configured grant (for example, SPS PDSCH), the network indicates m spatial domain parameters. For a time domain unit with only PDSCH reception, the terminal applies the third spatial domain parameter of the m spatial domain parameters to perform reception; for a time domain unit in which PDSCH is received, if uplink transmission is also present, the terminal applies the fourth spatial domain parameter of the m spatial domain parameters to perform reception. This example may refer to Embodiment 6 below.

It should be noted that the first spatial domain parameter, the second spatial domain parameter, the third spatial domain parameter, or the fourth spatial domain parameter are used to avoid confusion in description and are not actual sequential numbers. For example, when only uplink transmission is present on the first time domain unit, the terminal adopts a first UL spatial domain parameter (corresponding to the first spatial domain parameter); when both uplink transmission and downlink reception are present on the first time domain unit, in this case, the terminal DL uses the determined DL spatial domain parameter indicated by the network, and the terminal adopts a second UL spatial domain parameter (corresponding to the second spatial domain parameter); when only downlink reception is present on the first time domain unit, the terminal adopts a first DL spatial domain parameter (corresponding to the third spatial domain parameter); and when both uplink transmission and downlink reception are present on the first time domain unit, in this case, the terminal UL uses the determined UL spatial domain parameter indicated by the network, and the terminal adopts a second DL spatial domain parameter (corresponding to the fourth spatial domain parameter).

Specifically, for a DL reception with a determined DL spatial domain parameter indicated by the network, only the second UL spatial domain parameter may be adjusted to minimize the interference caused by UL transmission to DL reception. For a UL transmission with a determined UL spatial domain parameter indicated by the network, only the second DL spatial domain parameter may be adjusted to avoid interference from UL transmission to DL reception.

The second UL spatial domain parameter and the second DL spatial domain parameter may be adjusted non- simultaneously, or may be adjusted simultaneously. If adjusted simultaneously, they should belong to a set of UL-DL spatial domain parameter pairs (pair) configured by the network, where the second UL spatial domain parameter and the second DL spatial domain parameter in the spatial domain parameter pairs in the set have lower interference.

Through the above setting of spatial parameters, the interference between the second UL spatial domain parameter and the second DL spatial domain parameter can be minimized. Specifically, the second UL spatial domain parameter may be adjusted first to minimize the interference caused by UL transmission to DL reception, and then the second DL spatial domain parameter may be adjusted to avoid reintroducing interference to DL reception again.

Optionally, on the basis of the above various embodiments, the method further includes: within one time domain period, the terminal transmits uplink data using a different spatial domain parameter to obtain a self-interference measurement result of the transmitted uplink data on the received downlink data, where the self-interference measurement result is used (by the network-side device) to determine the spatial domain parameter used for uplink transmission or downlink reception of the terminal, so as to minimize self-interference as much as possible. For details, refer to the description of Embodiment 2 below.

Optionally, on the basis of the above various embodiments, that the terminal determines, based on whether uplink transmission and downlink reception are present on the first time domain unit, a spatial domain parameter used for uplink transmission or downlink reception includes: in a case that uplink transmission and downlink reception are present on the first time domain unit, the terminal determines the spatial domain parameter used for the uplink transmission according to a type of the downlink reception corresponding to the uplink transmission; or in a case that uplink transmission and downlink reception are present on the first time domain unit, the terminal determines the spatial domain parameter used for the downlink reception according to a type of the uplink transmission corresponding to the downlink reception; where the type of the downlink reception includes: PDSCH, CSI-RS, or PDCCH, and the type of the uplink transmission includes: PUSCH, PUCCH, or SRS.

In this embodiment, in a case that the same uplink transmission is combined with different downlink receptions, the spatial domain parameters used for the uplink transmission are different. For example, the network may configure spatial domain parameters to be respectively applied when PUSCH transmission is combined with different downlink receptions, for instance, the network may configure: parameter set 1: spatial domain parameters applied for simultaneous transmission of PUSCH and SPS PDSCH; and parameter set 2: spatial domain parameters applied for simultaneous transmission of PUSCH and CSI-RS. In the case that the same downlink reception is combined with different uplink transmissions, the spatial domain parameters used for the downlink reception are different.

Optionally, on the basis of the above various embodiments, the method further includes: if one said uplink transmission overlaps with more than one said downlink reception, the terminal performs uplink transmission according to a predefined spatial domain parameter or a network-configured spatial domain parameter; or if one said downlink reception overlaps with more than one said uplink transmission, the terminal performs downlink reception according to a predefined spatial domain parameter or a network-configured spatial domain parameter. For details, refer to the description of Embodiment 9 below.

The method for determining a spatial domain parameter according to this embodiment of this application has been described in detail above with reference to FIG. 2. The method for determining a spatial domain parameter according to another embodiment of this application will be described in detail below with reference to FIG. 4. It can be understood that the interaction between the network-side device and the terminal described from the network-side device side is the same as or corresponds to the description on the terminal side in the method shown in FIG. 2. To avoid repetition, related descriptions are appropriately omitted.

FIG. 4 is a schematic flowchart of implementation of a method for determining a spatial domain parameter according to an embodiment of this application, which may be applied to a network-side device. As shown in FIG. 4, the method 400 includes the following step.

S402: The network-side device sends indication information, where the indication information is used to indicate to a terminal whether uplink transmission and downlink reception are present on a first time domain unit, the indication information is further used for the terminal to determine a spatial domain parameter used for uplink transmission or downlink reception, and the first time domain unit is an SBFD time domain unit.

The method for determining a spatial domain parameter provided in the embodiments of this application allows the network-side device to send indication information, where the indication information is used to indicate to a terminal whether uplink transmission and downlink reception are present on a first time domain unit, the indication information is further used for the terminal to determine a spatial domain parameter used for uplink transmission or downlink reception, and the first time domain unit is an SBFD time domain unit. As the terminal can flexibly select the spatial domain parameter to be used, this helps improve the communication performance of the terminal.

Optionally, in an embodiment, the method satisfies at least one of the following: (1) if only uplink transmission is present on the first time domain unit, the indication information indicates the terminal to determine to perform uplink transmission using a first spatial domain parameter; (2) if uplink transmission and downlink reception are present on the first time domain unit, the indication information indicates the terminal to determine to perform uplink transmission using a second spatial domain parameter; (3) if only downlink reception is present on the first time domain unit, the indication information indicates the terminal to determine to perform downlink reception using a third spatial domain parameter; and (4) if uplink transmission and downlink reception are present on the first time domain unit, the indication information indicates the terminal to determine to perform downlink reception using a fourth spatial domain parameter.

Optionally, in an embodiment, the uplink transmission includes PUSCH transmission, the PUSCH transmission is PUSCH repetition transmission indicated by a dynamic grant, and the indication information is further used to indicate x spatial domain parameters for the terminal, where x is an integer greater than 1, the first spatial domain parameter is one of the x spatial domain parameters, and the second spatial domain parameter is one of the x spatial domain parameters; or the PUSCH transmission is PUSCH repetition transmission based on a configured grant, and the indication information is further used to indicate y spatial domain parameters for the terminal, where y is an integer greater than 1, the first spatial domain parameter is one of the y spatial domain parameters, and the second spatial domain parameter is one of the y spatial domain parameters.

Optionally, in an embodiment, the uplink transmission includes PUCCH transmission, the PUCCH transmission is PUCCH repetition transmission indicated by a dynamic grant or based on a configured grant, and the indication information is further used to indicate z spatial domain parameters for the terminal, where z is an integer greater than 1, the first spatial domain parameter is one of the z spatial domain parameters, and the second spatial domain parameter is one of the z spatial domain parameters.

Optionally, in an embodiment, the downlink reception includes PDSCH reception, the PDSCH reception is PDSCH repetition reception indicated by a dynamic grant or based on a configured grant, and the indication information is further used to indicate m spatial domain parameters for the terminal, where m is an integer greater than 1, the third spatial domain parameter is one of the m spatial domain parameters, and the fourth spatial domain parameter is one of the m spatial domain parameters.

To illustrate in detail the method for determining a spatial domain parameter provided in the embodiments of this application, several specific embodiments will be described below in conjunction, and the following embodiments may be implemented individually or in combination.

### Embodiment 1

To simplify the description, the embodiments of this application define the following two full duplex modes:

Network full duplex operation: that is, the network side adopts full duplex, while the UE side adopts half duplex.

Terminal full duplex operation: that is, the network side adopts full duplex, while the UE side adopts full duplex.

UE-side half duplex means that within one time unit, only DL signals or channels can be received, or only UL signals or channels can be transmitted.

UE-side full duplex means that within one time unit, DL signals or channels can be received simultaneously, and UL signals or channels can be transmitted simultaneously.

Network full duplex mode can achieve the objectives of enhanced coverage, reduced transmission latency, and improved resource utilization efficiency. Terminal full duplex mode can improve DL or UL throughput while achieving the above gains.

Usually, a guard band needs to be reserved between UL transmission and DL transmission, for example, a guard band is reserved to achieve frequency isolation and reduce self-interference. Generally, the self-interference cancellation capability of UE is weaker than that of the gNB side. For simultaneous transmission and reception on the UE side, the reserved GB needs to be larger than that on the gNB side, that is, more reserved physical resource blocks (Physical Resource Block, PRB) are required to serve as guard frequency bands.

As shown in FIG. 3, FIG. 3(a) illustrates a subband and guard band (Guard Band, GB) configuration for network-side subband full duplex, namely, the network configures time-frequency resources for an uplink (UL) subband and a downlink (DL) subband (or GB). In the UL subband, the network receives UL channels or signals from served terminals, and in the DL subband, the network transmits DL channels or signals to served terminals. DL transmission by the network may cause self-interference (Self-interference) to UL reception.

FIG. 3(b) illustrates a subband configuration for UE-side subband full duplex, where the network configures time-frequency resources for a UL subband and a DL subband (or GB) for the terminal, and UL transmission of the terminal may cause self-interference to DL reception.

Different terminals may have different capabilities, so GB may vary accordingly.

### Embodiment 2

This embodiment mainly describes the acquisition process of spatial domain parameters, corresponding to the following feature in the previous embodiment: within one time domain period, the terminal transmits uplink data using a different spatial domain parameter.

Spatial domain parameter adjustment is a method for self-interference suppression. A communication device may use spatial domain parameter (or spatial parameter) A to transmit a UL channel or signal, thereby reducing interference to DL reception using spatial domain parameter B and achieving self-interference suppression.

For spatial domain parameter A used for UL transmission channels or signals and spatial domain parameter B used for DL reception channels or signals, the terminal and the base station need to obtain related information.

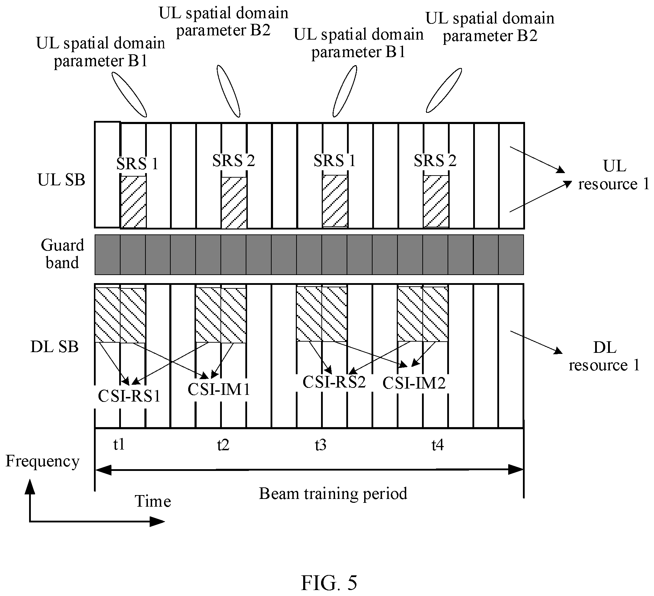

A flowchart for spatial domain parameter acquisition is shown in FIG. 5. Within one time domain period (for example, a beam training period), the network configures the UE to use different spatial domain parameters to transmit UL channels or signals, and simultaneously performs measurement in the DL subband to measure self-interference situations. Thus, the UE may measure self-interference situations corresponding to different transmission spatial domain parameters.

The network may configure the UE with at least one CSI reporting configuration (CSI report config), where each configuration may be associated with NZP CSI-RS resources, CSI-IM resources, and NZP CSI-RS interference measurement resources. The network may configure interference measurement resources to be time-domain aligned with transmitting channels or signals, measure interference via interference measurement resources, and obtain channel quality indicator (Channel Quality Indicator, CQI) reports based on channel measurement resources and interference measurement resources, thereby determining self-interference situations when UL transmission is performed using different beam (beam) directions.

For example, the network configures the UE to periodically transmit SRS1 and SRS2, and simultaneously configures a plurality of CSI reporting configurations for the UE to perform measurements using associated CSI-RS (CSI-IM). The UE may report the measured CQIs to the network.

At time t1, the UE measures CQI 1 based on CSI-RS1 and CSI-IM1 (based on TCI state1), which may reflect the interference level caused by SRS1 (spatial relation info 1) leakage.

At time t2, the UE measures CQI 2 based on CSI-RS1 and CSI-IM1 (based on TCI state1), reflecting the interference level caused by SRS2 (spatial relation info 2) leakage.

At time t3, the UE measures CQI 3 based on CSI-RS2 and CSI-IM2 (based on TCI state2), which may reflect the interference level caused by SRS1 (spatial relation info 1) leakage.

At time t4, the UE measures CQI 4 based on CSI-RS2 and CSI-IM2 (based on TCI state2), reflecting the interference level caused by SRS2 (spatial relation info 2) leakage.

Different CQIs may characterize the self-interference intensity of a frequency in different spatial domain directions. Based on the reported CQI 1 to CQI 4, the network may derive interference situations of DL spatial domain parameters and UL spatial domain parameters according to the CQIs.

| CQI | UL, DL spatial domain parameter pair |
|---|---|
| CQI 1 | {TCI state 1, spatial relation info 1} |
| CQI 2 | {TCI state1, spatial relation info 2} |
| CQI 3 | {TCI state2, spatial relation info 1} |
| CQI 4 | {TCI state2, spatial relation info 2} |

DL spatial domain parameters may be spatial domain parameters associated with SSB/PBCH block index, tracking reference signal (Tracking Reference Signal, TRS) index, and the like.

UL spatial domain parameters may be spatial domain parameters associated with SRS resources, for example, provided by SRS-ResourceIndicator IE or PUCCH spatial relation information.

DL resources may include PDSCH, PDCCH, SSB/PBCH block, channel state information reference signal (Channel State Information-Reference Signal, CSI-RS), and the like.

UL resources may include PUSCH, SRS, and the like.

Using a similar process, UL and DL spatial domain parameter pairs on different frequencies may be measured through the transmission of UL resources on different frequencies and the reception of DL resources on different frequencies.

The network configures or indicates to the UE a set of spatial domain parameter pairs (pair) for simultaneous UE full duplex communication. When the UE performs full duplex communication, it selects the UL spatial domain parameter and the DL spatial domain parameter to be adopted from the set of spatial domain parameter pairs (pair).

### Embodiment 3

For dynamically scheduled PUSCH repetition transmission, the network indicates x (>1) spatial domain parameters.

The network may additionally indicate an SRS resource indicator (SRS resource indicator) in the scheduling DCI to specify the spatial domain parameter used for PUSCH repetition transmission when the UE simultaneously performs UL and DL transmission.

The network may extend the SRS resource indicator to indicate more than one spatial domain parameter, for instance, the spatial domain parameter indication field in the scheduling DCI may be defined as shown in Table 1.

**Table 1**

| Index | Spatial domain parameter set | |
|---|---|---|
| | Spatial domain parameter only for uplink | UL spatial domain parameter for simultaneous UL and DL transmission |
| 0 | A1 | A2 |
| 1 | B1 | B2 |
| ... | | |

Optionally, the network may configure spatial domain parameters to be respectively applied when PUSCH is combined with the reception of different DL signals/channels. For instance, the network may configure each row in the above table as shown in Table 2, which may include the following: spatial domain parameters applied for simultaneous transmission of PUSCH and SPS PDSCH; spatial domain parameters applied for simultaneous transmission of PUSCH and CSI-RS; spatial domain parameters applied for simultaneous transmission of PUSCH and PDCCH; and the like.

Optionally, the network may configure different spatial domain parameters applied for PDCCHs corresponding to different TCI states, including the following: spatial domain parameters applied for simultaneous transmission of PUSCH and the PDCCH of TCI state A; and spatial domain parameters applied for simultaneous transmission of PUSCH and the PDCCH of TCI state B.

**Table 2**

| Index | Spatial domain parameter set | | | | |
|---|---|---|---|---|---|
| | Spatial domain parameter 1 only for uplink | Spatial domain parameter 2 applied for simultaneous transmission of PUSCH and SPS PDSCH | Spatial domain parameter 3 applied for simultaneous transmission of PUSCH and CSI-RS | ... | Spatial domain parameter n applied for simultaneous transmission of PUSCH and PDCCH of TCI state B |
| 0 | A1 | A2 | A3 | ... | An |
| 1 | B1 | B2 | B3 | ... | Bn |
| ... | | | | | ... |

### Embodiment 4

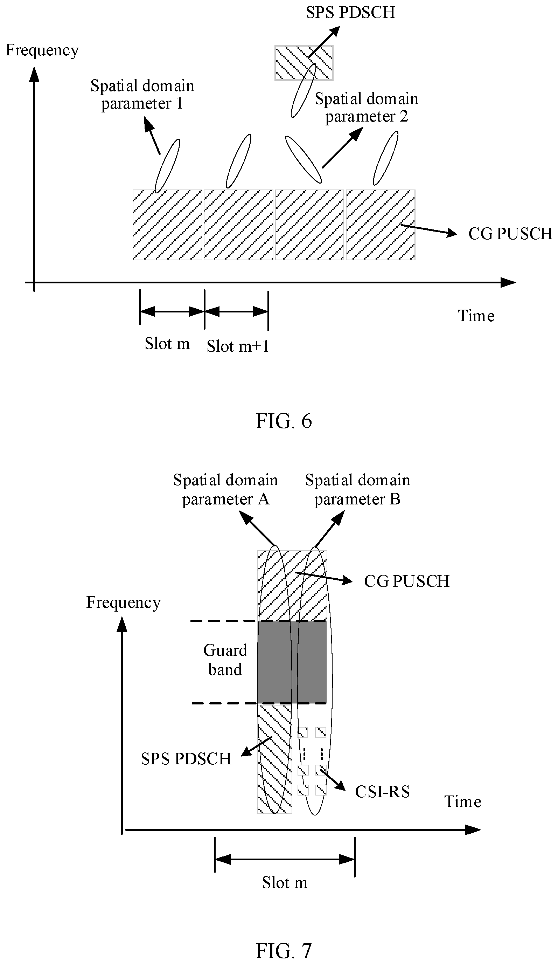

For semi-statically configured CG PUSCH, the network may configure y spatial domain parameters, as shown in FIG. 6.

For example,

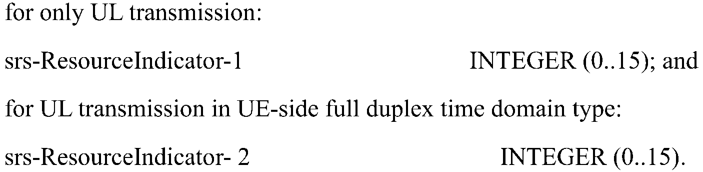

Optionally, the network may configure spatial domain parameters to be respectively applied when PUSCH is combined with the reception of different DL signals/channels. For instance, the network may configure:

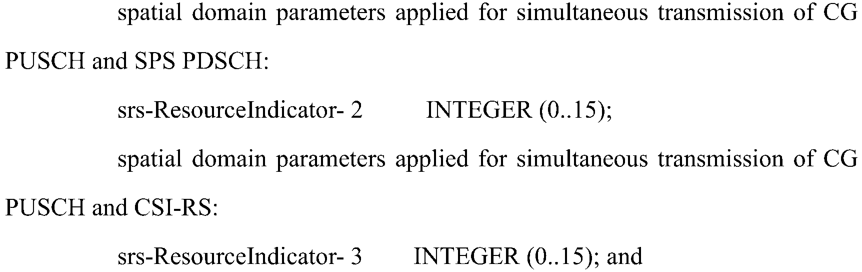

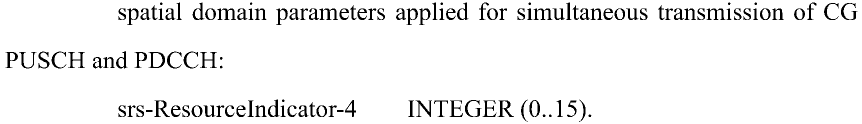

Optionally, the network may configure srs-ResourceIndicator-2, 3, and 4 for time domain units configured as UE-side full duplex (in which only UL transmission may be present), or for time domain units configured for UE to perform full duplex operation (in which both UL transmission and DL transmission are present).

### Embodiment 5:

On the first time domain unit, for the following two cases: only PUCCH transmission; and both PUCCH transmission and downlink reception, the network may configure or indicate different spatial domain parameters, for example, configure different PUCCH-SpatialRelationInfo (through parameter spatialRelationInfo).

For only UL transmission:

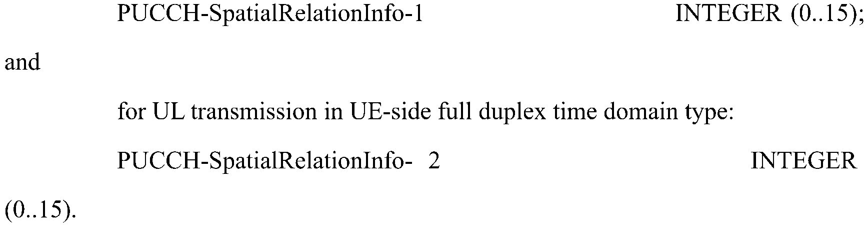

The network may configure a spatial relation between a reference RS and PUCCH, where the reference RS may be SSB/CSI-RS/SRS.

If the reference signal configured by PUCCH-SpatialRelationInfo is SSB index, the UE uses the same spatial domain parameter as receiving the SS/PBCH block to transmit PUCCH, where the index of the SS/PBCH block is determined by the SSB index of the same serving cell. Or, if servingCellId is provided, it is determined for the serving cell indicated by servingCellId.

If the reference signal configured by PUCCH-SpatialRelationInfo is CSI-RS-Index, the UE uses the same spatial domain parameter for transmitting PUCCH as that for receiving CSI-RS, where the CSI-RS is determined by CSI-RS-Index of the same serving cell, or if servingCellId is provided, it is determined for the serving cell indicated by servingCellId.

If the reference signal configured by PUCCH-SpatialRelationInfo is SRS, the UE uses the same spatial domain parameter for transmitting PUCCH as that for SRS transmission, where the SRS is determined by the SRS resource index of the same serving cell and/or activated UL BWP, or if servingCellId and/or uplinkBWP is provided, it is determined for the serving cell indicated by servingCellId and/or the UL BWP indicated by uplinkBWP.

Optionally, the network may configure spatial domain parameters to be respectively applied when PUCCH is combined with the reception of different DL signals/channels. For instance, the network may configure:
spatial domain parameters applied for simultaneous transmission of PUCCH and SPS PDSCH:
PUCCH-SpatialRelationInfo-2;
spatial domain parameters applied for simultaneous transmission of PUCCH and CSI-RS:
   PUCCH-SpatialRelationInfo-3; and
   spatial domain parameters applied for simultaneous transmission of PUCCH and PDCCH:
      PUCCH-SpatialRelationInfo-4.

Optionally, the network may configure PUCCH-SpatialRelationInfo-2 and 3 for time domain units configured as UE-side full duplex (in which only UL transmission may be present), or for time domain units configured for UE to perform full duplex operation (in which both UL transmission and DL transmission are present).

### Embodiment 6

For repetition transmission of dynamically scheduled PDSCH or SPS PDSCH, the network indicates corresponding x (>1) spatial domain parameters.

The network may additionally indicate a TCI state indicator in the scheduling DCI or activation DCI to specify the spatial domain parameters used when the UE performs only DL transmission and simultaneously performs UL and DL transmission.

The network may extend the TCI state indicator to indicate more than one spatial domain parameter, for instance, the spatial domain parameter indication field in the scheduling DCI or activation DCI may be defined as shown in Table 1.

Optionally, the network may configure spatial domain parameters to be respectively applied when PDSCH is combined with the transmission of different UL signals/channels. For instance, the network may configure each row in the above Table 1, including the following: spatial domain parameters applied for simultaneous transmission of PDSCH and CG PUSCH; spatial domain parameters applied for simultaneous transmission of PDSCH and SRS; spatial domain parameters applied for simultaneous transmission of PDSCH and PUCCH; and spatial domain parameters applied for simultaneous transmission of PDSCH and PRACH.

It is worth noting that the spatial domain parameters determined in this embodiment may be the same as the spatial domain parameters determined in the above embodiments. The difference lies in whether they are used for DL reception indication or UL transmission indication.

### Embodiment 7

For dynamically scheduled PUSCH repetition transmission, the network may indicate to the UE more than one transmitted precoding matrix indicator (Transmitted Precoding Matrix Indicator, TPMI) value, for indicating a spatial domain parameter to be used when the UE simultaneously performs UL and DL transmission.

For configured PUSCH repetition transmission, the network may configure for the UE more than one TPMI value, for indicating a spatial domain parameter to be used when the UE simultaneously performs UL and DL transmission.

### Embodiment 8

Simultaneous UL and DL transmission is defined as occurring when at least one symbol of the DL transmission channel/signal overlaps with the UL transmission channel/signal.

### Embodiment 9

If one UL channel/signal overlaps with more than one DL channel/signal, the UE transmits the UL channel/signal in accordance with a predefined rule or network-configured spatial domain parameters.

For example, the network indicates using spatial domain parameter A for transmission when a CG PUSCH is transmitted simultaneously with reception of an SPS PDSCH, and the network indicates using spatial domain parameter B when a CG PUSCH is transmitted simultaneously with reception of a CSI-RS.

If a CG PUSCH is transmitted simultaneously with reception of an SPS PDSCH and a CSI-RS, as shown in FIG. 7, the UE may use either spatial domain parameters A or B for transmission in accordance with a predefined rule, or the UE may use an additional spatial domain parameter C indicated by the network for transmission.

Similarly, if a DL channel/signal overlaps with more than one UL channel/signal, the UE receives the DL channel/signal in accordance with a predefined rule or network-configured spatial domain parameters.

The set of UL spatial domain parameter and DL spatial domain parameter pairs for full duplex communication indicated by the network to the UE may be configured or indicated via dynamic signaling, MAC CE, or RRC signaling.

The execution subject of the method for determining a spatial domain parameter provided in the embodiments of this application may be an apparatus for determining a spatial domain parameter. In the embodiments of this application, the apparatus for determining a spatial domain parameter executing the method for determining a spatial domain parameter is taken as an example to illustrate the apparatus for determining a spatial domain parameter provided in the embodiments of this application.

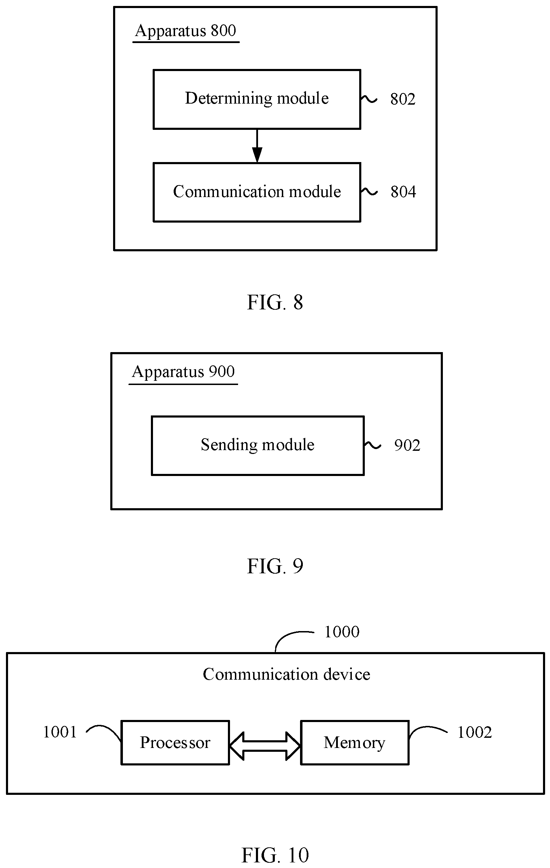

FIG. 8 is a schematic structural diagram of an apparatus for determining a spatial domain parameter according to an embodiment of this application, which may correspond to the terminal in other embodiments. As shown in FIG. 8, the apparatus 800 includes the following modules:
a determining module 802, configured to determine, based on whether uplink transmission and downlink reception are present on a first time domain unit, a spatial domain parameter used for uplink transmission or downlink reception, where the first time domain unit is an SBFD time domain unit; and
a communication module 804, configured to perform uplink transmission or downlink reception using the spatial domain parameter.

In this embodiment of this application, the apparatus 800 determines, based on whether uplink transmission and downlink reception are present on a first time domain unit, the spatial domain parameter used for uplink transmission or downlink reception, where the first time domain unit is an SBFD time domain unit. Since the spatial domain parameter to use may be flexibly selected, this helps improve communication performance.

Optionally, in an embodiment, the determining module 802 is configured for at least one of the following: (1) if only uplink transmission is present on the first time domain unit, determining to perform uplink transmission using a first spatial domain parameter; (2) if uplink transmission and downlink reception are present on the first time domain unit, determining to perform uplink transmission using a second spatial domain parameter; (3) if only downlink reception is present on the first time domain unit, determining to perform downlink reception using a third spatial domain parameter; and (4) if uplink transmission and downlink reception are present on the first time domain unit, determining to perform downlink reception using a fourth spatial domain parameter.

Optionally, in an embodiment, in a case that the uplink transmission includes PUSCH transmission, the communication module 804 is configured to perform the PUSCH transmission on the first time domain unit using the first spatial domain parameter; or perform the PUSCH transmission on the first time domain unit using the second spatial domain parameter; where the PUSCH transmission is PUSCH repetition transmission indicated by a dynamic grant, the apparatus is indicated with x spatial domain parameters, x is an integer greater than 1, the first spatial domain parameter is one of the x spatial domain parameters, and the second spatial domain parameter is one of the x spatial domain parameters; or the PUSCH transmission is PUSCH repetition transmission based on a configured grant, the apparatus is configured with y spatial domain parameters, y is an integer greater than 1, the first spatial domain parameter is one of the y spatial domain parameters, and the second spatial domain parameter is one of the y spatial domain parameters.

Optionally, in an embodiment, in a case that the uplink transmission includes PUCCH transmission, the communication module 804 is configured to perform the PUCCH transmission on the first time domain unit using the first spatial domain parameter; or perform the PUCCH transmission on the first time domain unit using the second spatial domain parameter; where the PUCCH transmission is PUCCH repetition transmission indicated by a dynamic grant or based on a configured grant, the apparatus is indicated or configured with z spatial domain parameters, z is an integer greater than 1, the first spatial domain parameter is one of the z spatial domain parameters, and the second spatial domain parameter is one of the z spatial domain parameters.

Optionally, in an embodiment, the PUCCH transmission is associated with a reference signal, and the spatial domain parameter used for the PUCCH transmission is the same as the spatial domain parameter used for transmitting or receiving the reference signal.

Optionally, in an embodiment, in a case that the downlink reception includes PDSCH reception, the communication module 804 is configured to perform the PDSCH reception on the first time domain unit using the third spatial domain parameter; or perform the PDSCH reception on the first time domain unit using the fourth spatial domain parameter; where the PDSCH reception is PDSCH repetition reception indicated by a dynamic grant or based on a configured grant, the apparatus is indicated or configured with m spatial domain parameters, m is an integer greater than 1, the third spatial domain parameter is one of the m spatial domain parameters, and the fourth spatial domain parameter is one of the m spatial domain parameters.

Optionally, in an embodiment, the communication module 804 is further configured to transmit uplink data using a different spatial domain parameter within one time domain period.

Optionally, in an embodiment, the presence of uplink transmission and downlink reception on the first time domain unit includes: at least one symbol overlaps between the uplink transmission and the downlink reception on the first time domain unit.

Optionally, in an embodiment, the determining module 802 is configured for at least one of the following: (1) in a case that uplink transmission and downlink reception are present on the first time domain unit, determining the spatial domain parameter used for the uplink transmission according to a type of the downlink reception corresponding to the uplink transmission; and (2) in a case that uplink transmission and downlink reception are present on the first time domain unit, determining the spatial domain parameter used for the downlink reception according to a type of the uplink transmission corresponding to the downlink reception; where the type of the downlink reception includes: PDSCH, CSI-RS, or PDCCH, and the type of the uplink transmission includes: PUSCH, PUCCH, or SRS.

Optionally, in an embodiment, the communication module 804 is further configured to: if one said uplink transmission overlaps with more than one said downlink reception, perform uplink transmission according to a predefined spatial domain parameter or a network-configured spatial domain parameter; or if one said downlink reception overlaps with more than one said uplink transmission, perform downlink reception according to a predefined spatial domain parameter or a network-configured spatial domain parameter.

Optionally, in an embodiment, the spatial domain parameter includes at least one of the following: SRS spatial relation information, PUCCH spatial relation information, TCI state, and the like.

For the apparatus 800 according to this embodiment of this application, reference may be made to the processes of the method 200 in the corresponding embodiment of this application, and the units/modules of the apparatus 800 and other operations and/or functions described above are respectively intended to implement the corresponding processes in the method 200, with the same or equivalent technical effects achieved. For brevity, details are not described herein again.

The apparatus for determining a spatial domain parameter in this embodiment of this application may be an electronic device, for example, an electronic device with an operating system, or may be a component in an electronic device, for example, an integrated circuit or a chip. The electronic device may be a terminal or may be another device except the terminal. For example, the terminal may include but is not limited to the types of the terminal 11 listed above, and the another device may be a server, a network attached storage (Network Attached Storage, NAS), or the like, which are not specifically limited in the embodiments of this application.

FIG. 9 is a schematic structural diagram of an apparatus for determining a spatial domain parameter according to an embodiment of this application, which may correspond to the network-side device in other embodiments. As shown in FIG. 9, the apparatus 900 includes the following modules:
a sending module 902, configured to send indication information, where the indication information is used to indicate to a terminal whether uplink transmission and downlink reception are present on a first time domain unit, and the indication information is further used for the terminal to determine a spatial domain parameter used for uplink transmission or downlink reception, where the first time domain unit is an SBFD time domain unit.

Optionally, in an embodiment, the apparatus 900 further includes a receiving module and the like.

In this embodiment of this application, the sending module sends indication information, where the indication information is used to indicate to a terminal whether uplink transmission and downlink reception are present on a first time domain unit, and the indication information is further used for the terminal to determine a spatial domain parameter used for uplink transmission or downlink reception, where the first time domain unit is an SBFD time domain unit. As the terminal can flexibly select the spatial domain parameter to be used, this helps improve the communication performance of the terminal.

Optionally, in an embodiment, the indication information satisfies at least one of the following: (1) if only uplink transmission is present on the first time domain unit, the indication information indicates the terminal to determine to perform uplink transmission using a first spatial domain parameter; (2) if uplink transmission and downlink reception are present on the first time domain unit, the indication information indicates the terminal to determine to perform uplink transmission using a second spatial domain parameter; (3) if only downlink reception is present on the first time domain unit, the indication information indicates the terminal to determine to perform downlink reception using a third spatial domain parameter; and (4) if uplink transmission and downlink reception are present on the first time domain unit, the indication information indicates the terminal to determine to perform downlink reception using a fourth spatial domain parameter.

Optionally, in an embodiment, the uplink transmission includes PUSCH transmission, the PUSCH transmission is PUSCH repetition transmission indicated by a dynamic grant, and the indication information is further used to indicate x spatial domain parameters for the terminal, where x is an integer greater than 1, the first spatial domain parameter is one of the x spatial domain parameters, and the second spatial domain parameter is one of the x spatial domain parameters; or the PUSCH transmission is PUSCH repetition transmission based on a configured grant, and the indication information is further used to indicate y spatial domain parameters for the terminal, where y is an integer greater than 1, the first spatial domain parameter is one of the y spatial domain parameters, and the second spatial domain parameter is one of the y spatial domain parameters.

Optionally, in an embodiment, the uplink transmission includes PUCCH transmission, the PUCCH transmission is PUCCH repetition transmission indicated by a dynamic grant or based on a configured grant, and the indication information is further used to indicate z spatial domain parameters for the terminal, where z is an integer greater than 1, the first spatial domain parameter is one of the z spatial domain parameters, and the second spatial domain parameter is one of the z spatial domain parameters.

Optionally, in an embodiment, the downlink reception includes PDSCH reception, the PDSCH reception is PDSCH repetition reception indicated by a dynamic grant or based on a configured grant, and the indication information is further used to indicate m spatial domain parameters for the terminal, where m is an integer greater than 1, the third spatial domain parameter is one of the m spatial domain parameters, and the fourth spatial domain parameter is one of the m spatial domain parameters.

For the apparatus 900 according to this embodiment of this application, reference may be made to the processes of the method 400 in the corresponding embodiment of this application, and the units/modules of the apparatus 900 and other operations and/or functions described above are respectively intended to implement the corresponding processes in the method 400, with the same or equivalent technical effects achieved. For brevity, details are not described herein again.

The apparatus for determining a spatial domain parameter provided in this embodiment of this application may implement each process implemented by the method embodiments in FIG. 2 and FIG. 4, with the same technical effects achieved. To avoid repetition, details are not described herein again.

Optionally, as shown in FIG. 10, an embodiment of this application further provides a communication device 1000, including a processor 1001 and a memory 1002, where the memory 1002 stores a program or instructions capable of running on the processor 1001. For example, when the communication device 1000 is a terminal, the program or instructions are executed by the processor 1001 to implement the steps of the embodiment of the method for determining a spatial domain parameter described above, with the same technical effects achieved. When the communication device 1000 is a network-side device, the program or instructions are executed by the processor 1001 to implement the steps of the embodiment of the method for determining a spatial domain parameter described above, with the same technical effects achieved. To avoid repetition, details are not described herein again.

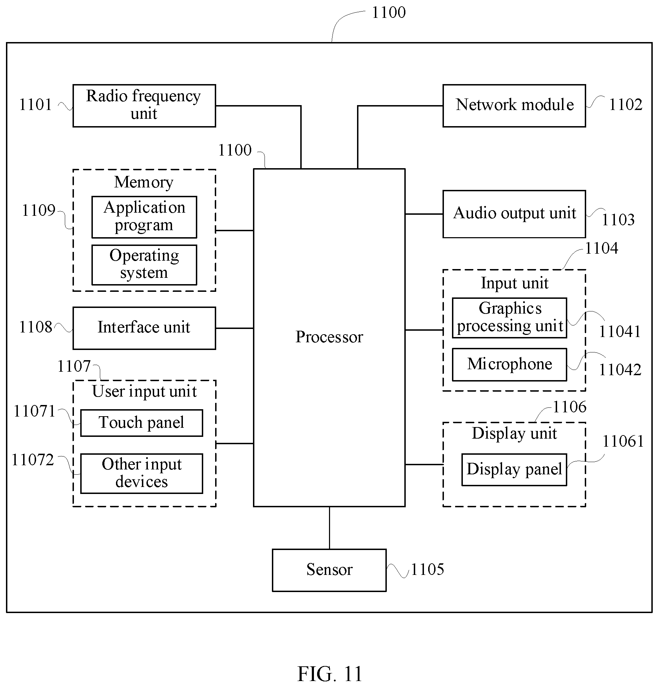

An embodiment of this application further provides a terminal, including a processor and a communication interface, where the processor is configured to determine, based on whether uplink transmission and downlink reception are present on a first time domain unit, a spatial domain parameter used for uplink transmission or downlink reception, where the first time domain unit is an SBFD time domain unit, and the communication interface is configured to perform uplink transmission or downlink reception using the spatial domain parameter. This terminal embodiment corresponds to the foregoing method embodiment on the terminal side. All implementations in the foregoing method embodiment may be applicable to this terminal embodiment, with the same technical effects achieved. Specifically, FIG. 11 is a schematic structural diagram of hardware of a terminal for implementing embodiments of this application.

The terminal 1100 includes, but is not limited to, at least some of components such as a radio frequency unit 1101, a network module 1102, an audio output unit 1103, an input unit 1104, a sensor 1105, a display unit 1106, a user input unit 1107, an interface unit 1108, a memory 1109, and a processor 1110.

Persons skilled in the art can understand that the terminal 1100 may further include a power supply (for example, a battery) for supplying power to the components. The power supply may be logically connected to the processor 1110 through a power management system. In this way, functions such as charge management, discharge management, and power consumption management are implemented by using the power management system. The structure of the terminal shown in FIG. 11 does not constitute any limitation on the terminal. The terminal may include more or fewer components than shown in the figure, or a combination of some components, or the components disposed differently. Details are not described herein again.

It should be understood that in this embodiment of this application, the input unit 1104 may include a graphics processing unit (Graphics Processing Unit, GPU) 11041 and a microphone 11042. The graphics processing unit 11041 processes image data of a static picture or a video that is obtained by an image capture apparatus (for example, a camera) in a video capture mode or an image capture mode. The display unit 1106 may include a display panel 11061, and the display panel 11061 may be configured in a form of a liquid crystal display, an organic light-emitting diode, and the like. The user input unit 1107 includes at least one of a touch panel 11071 and other input devices 11072. The touch panel 11071 is also referred to as a touchscreen. The touch panel 11071 may include two parts: a touch detection apparatus and a touch controller. The other input devices 11072 may include but are not limited to a physical keyboard, a function key (for example, a volume control key or a power on/off key), a trackball, a mouse, a joystick, and the like. Details are not described herein.

In this embodiment, after receiving downlink data from a network-side device, the radio frequency unit 1101 may transmit the downlink data to the processor 1110 for processing. In addition, the radio frequency unit 1101 may transmit uplink data to the network-side device. Generally, the radio frequency unit 1101 includes but is not limited to an antenna, an amplifier, a transceiver, a coupler, a low noise amplifier, and a duplexer.

The memory 1109 may be configured to store software programs or instructions and various data. The memory 1109 may include first storage area for storing programs or instructions and a second storage area for storing data. The first storage area may store an operating system, an application program or instruction required by at least one function (for example, a sound playback function or an image playback function), and the like. In addition, the memory 1109 may include either a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1109 in this embodiment of this application includes but is not limited to these and any other suitable types of memories.

The processor 1110 may include one or more processing units. Optionally, an application processor and a modem processor are integrated in the processor 1110. The application processor primarily processes operations relating to an operating system, user interfaces, application programs, and the like. The modem processor primarily processes radio communication signals, for example, being a baseband processor. It can be understood that the modem processor may alternatively be not integrated in the processor 1110.

The processor 1110 may be configured to determine, based on whether uplink transmission and downlink reception are present on a first time domain unit, a spatial domain parameter used for uplink transmission or downlink reception, where the first time domain unit is an SBFD time domain unit; and the radio frequency unit 1101 may be configured to perform uplink transmission or downlink reception using the spatial domain parameter.

In this embodiment of this application, the terminal determines, based on whether uplink transmission and downlink reception are present on a first time domain unit, the spatial domain parameter used for uplink transmission or downlink reception, where the first time domain unit is an SBFD time domain unit. As the terminal can flexibly select the spatial domain parameter to be used, this helps improve the communication performance of the terminal.

It can be understood that the implementation process of each implementation mode mentioned in this embodiment may refer to the related description in the method embodiment, with the same or corresponding technical effects achieved. To avoid repetition, details are not repeated herein.

An embodiment of this application further provides a network-side device, including a processor and a communication interface, where the communication interface is configured to send indication information, the indication information is used to indicate to a terminal whether uplink transmission and downlink reception are present on a first time domain unit, the indication information is further used for the terminal to determine a spatial domain parameter used for uplink transmission or downlink reception, and the first time domain unit is an SBFD time domain unit. The network-side device embodiment corresponds to the foregoing network-side device method embodiment. All implementations in the foregoing method embodiment may be applicable to the network-side device embodiment, with the same technical effect achieved.

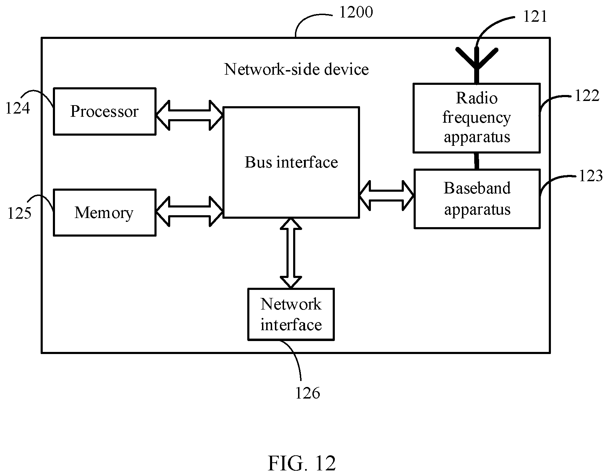

An embodiment of this application further provides a network-side device. As shown in FIG. 12, the network-side device 1200 includes: an antenna 121, a radio frequency apparatus 122, a baseband apparatus 123, a processor 124, and a memory 125. The antenna 121 is connected to the radio frequency apparatus 122. In an uplink direction, the radio frequency apparatus 122 receives information through the antenna 121, and sends the received information to the baseband apparatus 123 for processing. In a downlink direction, the baseband apparatus 123 processes to-be-sent information, and sends the information to the radio frequency apparatus 122; and the radio frequency apparatus 122 processes the received information and then sends the information using the antenna 121.

The method performed by the network-side device in the foregoing embodiment may be implemented in the baseband apparatus 123, and the baseband apparatus 123 includes a baseband processor.

The baseband apparatus 123 may include, for example, at least one baseband board, where a plurality of chips are disposed on the baseband board. As shown in FIG. 12, one of the chips is, for example, the baseband processor, and connected to the memory 125 through a bus interface, to invoke the program in the memory 125 to perform the operations of the network device shown in the foregoing method embodiment.

The network-side device may further include a network interface 126, where the interface is, for example, a common public radio interface (Common Public Radio Interface, CPRI).

The network-side device 1200 in this embodiment of this application further includes: instructions or a program stored in the memory 125 and capable of running on the processor 124. The processor 124 invokes the instructions or program in the memory 125 to execute the method executed by the modules shown in FIG. 9, with the same technical effects achieved. To avoid repetition, details are not described herein again.

An embodiment of this application further provide a readable storage medium, where the readable storage medium stores a program or instructions, and when the program or instructions are executed by a processor, the processes of the foregoing embodiments of the method for determining a spatial domain parameter are implemented, with the same technical effects achieved. To avoid repetition, details are not described herein again.

The processor is a processor in the terminal described in the foregoing embodiment. The readable storage medium may be a nonvolatile storage medium or may be a non-transitory storage medium. The readable storage medium includes a computer-readable storage medium, for example, a computer read-only memory ROM, a random access memory RAM, a magnetic disk, or an optical disk. In some examples, the readable storage medium may be a non-transitory readable storage medium.

In addition, an embodiment of this application provides a chip. The chip includes a processor and a communication interface. The communication interface is coupled to the processor. The processor is configured to run a program or instructions to implement each process of the foregoing embodiment of the method for determining a spatial domain parameter, with the same technical effects achieved. To avoid repetition, details are not described herein again.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiment of the method for determining a spatial domain parameter, with the same technical effects achieved. To avoid repetition, details are not described herein again.

An embodiment of this application further provides a system for determining a spatial domain parameter, including a terminal and a network-side device, where the terminal may be configured to execute the steps of the method for determining a spatial domain parameter as described above, and the network-side device may be configured to execute the steps of the method for determining a spatial domain parameter as described above.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the presence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. This computer software product is stored in a storage medium (such as ROM, RAM, magnetic disk, or optical disk) and includes a number of instructions to enable the terminal or the network-side device to execute the methods described in the various embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may further devise many forms of embodiments without departing from principles of this application and the protection scope of the claims, and all these embodiments fall within the protection scope of this application.

## Claims

1. A method for determining a spatial domain parameter, comprising:
determining, by a terminal based on whether uplink transmission and downlink reception are present on a first time domain unit, a spatial domain parameter used for uplink transmission or downlink reception, wherein the first time domain unit is a subband full duplex SBFD time domain unit; and
performing, by the terminal, uplink transmission or downlink reception using the spatial domain parameter.

2. The method according to claim 1, wherein the determining, by a terminal based on whether uplink transmission and downlink reception are present on a first time domain unit, a spatial domain parameter used for uplink transmission or downlink reception comprises at least one of the following:
if only uplink transmission is present on the first time domain unit, determining, by the terminal, to perform uplink transmission using a first spatial domain parameter;
if uplink transmission and downlink reception are present on the first time domain unit, determining, by the terminal, to perform uplink transmission using a second spatial domain parameter;
if only downlink reception is present on the first time domain unit, determining, by the terminal, to perform downlink reception using a third spatial domain parameter; and
if uplink transmission and downlink reception are present on the first time domain unit, determining, by the terminal, to perform downlink reception using a fourth spatial domain parameter.

3. The method according to claim 2, wherein in a case that the uplink transmission comprises physical uplink shared channel PUSCH transmission,
the determining, by the terminal, to perform uplink transmission using a first spatial domain parameter comprises: performing, by the terminal, the PUSCH transmission in the first time domain unit using the first spatial domain parameter; and
the determining, by the terminal, to perform uplink transmission using a second spatial domain parameter comprises: performing, by the terminal, the PUSCH transmission in the first time domain unit using the second spatial domain parameter; wherein
the PUSCH transmission is PUSCH repetition transmission indicated by a dynamic grant, the terminal is indicated with x spatial domain parameters, x is an integer greater than 1, the first spatial domain parameter is one of the x spatial domain parameters, and the second spatial domain parameter is one of the x spatial domain parameters; or
the PUSCH transmission is PUSCH repetition transmission based on a configured grant, the terminal is configured with y spatial domain parameters, y is an integer greater than 1, the first spatial domain parameter is one of the y spatial domain parameters, and the second spatial domain parameter is one of the y spatial domain parameters.

4. The method according to claim 2, wherein in a case that the uplink transmission comprises physical uplink control channel PUCCH transmission,
the determining, by the terminal, to perform uplink transmission using a first spatial domain parameter comprises: performing, by the terminal, the PUCCH transmission in the first time domain unit using the first spatial domain parameter; and
the determining, by the terminal, to perform uplink transmission using a second spatial domain parameter comprises: performing, by the terminal, the PUCCH transmission in the first time domain unit using the second spatial domain parameter; wherein
the PUCCH transmission is PUCCH repetition transmission indicated by a dynamic grant or based on a configured grant, the terminal is indicated or configured with z spatial domain parameters, z is an integer greater than 1, the first spatial domain parameter is one of the z spatial domain parameters, and the second spatial domain parameter is one of the z spatial domain parameters.

5. The method according to claim 4, wherein the PUCCH transmission is associated with a reference signal, and the spatial domain parameter used for the PUCCH transmission is the same as the spatial domain parameter used for transmitting or receiving the reference signal.

6. The method according to claim 2, wherein in a case that the downlink reception comprises physical downlink shared channel PDSCH reception,
the determining, by the terminal, to perform downlink reception using a third spatial domain parameter comprises: performing, by the terminal, the PDSCH reception in the first time domain unit using the third spatial domain parameter; and
the determining, by the terminal, to perform downlink reception using a fourth spatial domain parameter comprises: performing, by the terminal, the PDSCH reception in the first time domain unit using the fourth spatial domain parameter; wherein
the PDSCH reception is PDSCH repetition reception indicated by a dynamic grant or based on a configured grant, the terminal is indicated or configured with m spatial domain parameters, m is an integer greater than 1, the third spatial domain parameter is one of the m spatial domain parameters, and the fourth spatial domain parameter is one of the m spatial domain parameters.

7. The method according to any one of claims 1 to 6, wherein the method further comprises:
transmitting, by the terminal, uplink data in one time domain period using a different spatial domain parameter.

8. The method according to any one of claims 1 to 7, wherein the presence of uplink transmission and downlink reception on the first time domain unit comprises:
at least one symbol overlaps between the uplink transmission and the downlink reception on the first time domain unit.

9. The method according to any one of claims 1 to 8, wherein the determining, by a terminal based on whether uplink transmission and downlink reception are present on a first time domain unit, a spatial domain parameter used for uplink transmission or downlink reception comprises:
in a case that uplink transmission and downlink reception are present on the first time domain unit, determining, by the terminal, the spatial domain parameter used for the uplink transmission according to a type of the downlink reception corresponding to the uplink transmission; or
in a case that uplink transmission and downlink reception are present on the first time domain unit, determining, by the terminal, the spatial domain parameter used for the downlink reception according to a type of the uplink transmission corresponding to the downlink reception; wherein
the type of the downlink reception comprises: PDSCH, channel state information reference signal CSI-RS, or physical downlink control channel PDCCH, and the type of the uplink transmission comprises: PUSCH, PUCCH, or SRS.

10. The method according to any one of claims 1 to 9, wherein the method further comprises:
if one said uplink transmission overlaps with more than one said downlink reception, performing, by the terminal, uplink transmission according to a predefined spatial domain parameter or a network-configured spatial domain parameter; or
if one said downlink reception overlaps with more than one said uplink transmission, performing, by the terminal, downlink reception according to a predefined spatial domain parameter or a network-configured spatial domain parameter.

11. The method according to any one of claims 1 to 10, wherein the spatial domain parameter comprises at least one of the following: sounding reference signal SRS spatial relation information, PUCCH spatial relation information, transmission configuration indicator TCI state.

12. A method for determining a spatial domain parameter, comprising:
sending, by a network-side device, indication information, wherein the indication information is used to indicate to a terminal whether uplink transmission and downlink reception are present on a first time domain unit, the indication information is further used for the terminal to determine a spatial domain parameter used for uplink transmission or downlink reception, and the first time domain unit is an SBFD time domain unit.

13. The method according to claim 12, wherein the method satisfies at least one of the following:
if only uplink transmission is present on the first time domain unit, the indication information indicates the terminal to determine to perform uplink transmission using a first spatial domain parameter;
if uplink transmission and downlink reception are present on the first time domain unit, the indication information indicates the terminal to determine to perform uplink transmission using a second spatial domain parameter;
if only downlink reception is present on the first time domain unit, the indication information indicates the terminal to determine to perform downlink reception using a third spatial domain parameter; and
if uplink transmission and downlink reception are present on the first time domain unit, the indication information indicates the terminal to determine to perform downlink reception using a fourth spatial domain parameter.

14. The method according to claim 13, wherein the uplink transmission comprises PUSCH transmission; and
the PUSCH transmission is PUSCH repetition transmission indicated by a dynamic grant, and the indication information is further used to indicate x spatial domain parameters for the terminal, wherein x is an integer greater than 1, the first spatial domain parameter is one of the x spatial domain parameters, and the second spatial domain parameter is one of the x spatial domain parameters; or
the PUSCH transmission is PUSCH repetition transmission based on a configured grant, and the indication information is further used to indicate y spatial domain parameters for the terminal, wherein y is an integer greater than 1, the first spatial domain parameter is one of the y spatial domain parameters, and the second spatial domain parameter is one of the y spatial domain parameters.

15. The method according to claim 13, wherein the uplink transmission comprises PUCCH transmission, the PUCCH transmission is PUCCH repetition transmission indicated by a dynamic grant or based on a configured grant, and the indication information is further used to indicate z spatial domain parameters for the terminal, wherein z is an integer greater than 1, the first spatial domain parameter is one of the z spatial domain parameters, and the second spatial domain parameter is one of the z spatial domain parameters.

16. The method according to claim 13, wherein the downlink reception comprises PDSCH reception, the PDSCH reception is PDSCH repetition reception indicated by a dynamic grant or based on a configured grant, and the indication information is further used to indicate m spatial domain parameters for the terminal, wherein m is an integer greater than 1, the third spatial domain parameter is one of the m spatial domain parameters, and the fourth spatial domain parameter is one of the m spatial domain parameters.

17. An apparatus for determining a spatial domain parameter, comprising:
a determining module, configured to determine, based on whether uplink transmission and downlink reception are present on a first time domain unit, a spatial domain parameter used for uplink transmission or downlink reception, wherein the first time domain unit is an SBFD time domain unit; and
a communication module, configured to perform uplink transmission or downlink reception using the spatial domain parameter.

18. An apparatus for determining a spatial domain parameter, comprising:
a sending module, configured to send indication information, wherein the indication information is used to indicate to a terminal whether uplink transmission and downlink reception are present on a first time domain unit, and the indication information is further used for the terminal to determine a spatial domain parameter used for uplink transmission or downlink reception, wherein the first time domain unit is an SBFD time domain unit.

19. A terminal, comprising a processor and a memory, wherein the memory stores a program or instructions executable on the processor, and the program or instructions, when executed by the processor, implement the steps of the method according to any one of claims 1 to 11.

20. A network-side device, comprising a processor and a memory, wherein the memory stores a program or instructions executable on the processor, and the program or instructions, when executed by the processor, implement the steps of the method according to any one of claims 12 to 16.

21. A readable storage medium, wherein the readable storage medium stores a program or instructions, and the program or instructions, when executed by a processor, implement the steps of the method according to any one of claims 1 to 16.

22. A chip, wherein the chip comprises a processor and a communication interface, the communication interface is coupled to the processor, and the processor is configured to run a program or instructions to implement the method according to any one of claims 1 to 16.

23. A computer program product, wherein the program product is executed by at least one processor to implement the method according to any one of claims 1 to 16.

24. An electronic device, wherein the electronic device is configured to execute the method according to any one of claims 1 to 16.
